# EUROPEAN PATENT APPLICATION

(11) **EP 3 340 198 A1**
(43) Date of publication of application: **27.06.2018**
(21) Application number: 17209760.2
(22) Date of filing: 21.12.2017
(51) Int. Cl.: G07G 1/00, G06K 7/10

(54) **READING APPARATUS**

(30) Priority: 21.12.2016 JP 2016248391
(71) Applicant: Toshiba TEC Kabushiki Kaisha, Tokyo 141-8562 (JP)
(72) Inventor: YAJIMA, Shinsuke, Shinagawa-ku,, Tokyo 141-8562 (JP)
(74) Representative: Takeuchi, Maya

(57) **Abstract**

A reading apparatus includes a housing in which an imaging window is provided, an image sensor provided in the housing, wherein an imaging region of the image sensor is located exteriorly of the housing, and the image sensor is positioned to receive light passing inwardly of the housing through the imaging window from the imaging region, and a lighting device, within the housing positioned above the window, configured to emit light to the imaging region through the imaging window.

## Description

### FIELD

Embodiments described herein relate generally to a reading apparatus.

### BACKGROUND

A technology related to object recognition is known. Image recognition of a commodity is performed by extracting feature data of the commodity from a captured image, and comparing the feature data with preset feature data for each of a plurality of reference commodities. In addition, a technology in which a type of merchandise such as green grocer merchandise is recognized using the technology, and sales registration of the merchandise is performed based on the recognition result, is proposed. For example, in a reading apparatus related to sales registration of merchandise, there is an apparatus to image merchandise held at the front side of an imaging window using an imaging device provided in a housing.

Meanwhile, in the above described reading apparatus, illuminance of an object within an imaging range is achieved by emitting light using lighting devices. In this case, the lighting devices emit light into an area in front of the imaging window, that is, in a direction in which a user is present. For this reason, there is a possibility that light of the lighting devices may directly enter the eyes of the user, and glare caused by the light may bother the user.

To solve the above-cited problems, there is provided a reading apparatus comprising: a housing in which an imaging window is provided; an image sensor provided in the housing, wherein an imaging region of the image sensor is located exteriorly of the housing, and the image sensor is positioned to receive light passing inwardly of the housing through the imaging window from the imaging region; and a lighting device within the housing positioned above the window, the lighting device configured to emit light to the imaging region through the imaging window.

Preferably, a plane of the imaging window and an optical axis of the image sensor are approximately orthogonal to each other.

Preferably, the optical axis of the image sensor passes through approximately a center of the imaging window.

Preferably, the lighting device is disposed along an upper edge portion of the imaging window.

The apparatus may further comprise : a diffusing filter which is provided in the housing, and configured to diffuse light emitted by the lighting device.

Preferably, the lighting device has a plurality of light sources horizontally aligned.

The apparatus may further comprise: a control board provided within the housing to control operations of the image sensor.

The present invention further relates to a POS(point-of-sele) device provided with the above-de scribed reading apparatus and a table wherein a plane of the imaging window and a plane of the table are at an acute angle with respect to each other.
The present invention further relates to a reading apparatus comprising: a housing in which an imaging window is provided at a side thereof and the imaging window faces a table, wherein a plane of the imaging window and a plane of the table are at an acute angle with respect to each other; an image sensor positioned to receive light passing inwardly of the housing through the imaging window from the imaging region; and a lighting device within the housing configured to emit light having an optical axis, wherein an angle between the optical axis of the lighting unit and the table is greater than the acute angle between the imaging window and the table.

Preferably, a plane of the imaging window and an optical axis of the image sensor are approximately orthogonal to each other.

Preferably, the optical axis of the image sensorpasses through approximately the center of the imaging window.

Preferably, the lighting device is disposed along an upper edge portion of the imaging window.

The apparatus may further comprise: a diffusing filter which is provided in the housing, and configured to diffuse light emitted by the lighting device.

Preferably, the lighting device has a plurality of light sources horizontally aligned.

The apparatus may further comprise: a control board provided within the housing to control operations of the image sensor.

The present invention also relates to a reading apparatus comprising: a housing in which an imaging window is provided, the imaging window including a first surface facing inwardly of the housing and a second surface facing outwardly of the housing, at least a portion of the housing extending over the first surface of the window; an image sensor provided in the housing, wherein an imaging region of the image sensor is located exteriorly of the housing, and the image sensor is positioned to receive light passing inwardly of the housing through the imaging window from the imaging region; and a lighting device within the housing, at least a portion of the lighting device positioned above the window, the lighting device configured to emit light to the imaging region through the imaging window.

Preferably, a plane of the imaging window and an optical axis of the image sensor are approximately orthogonal to each other.

Preferably, the optical axis of the image sensor passes through approximately a center of the imaging window.

Preferably, the lighting device is disposed along an upper edge portion of the imaging window.

The apparatus may further comprise : a diffusing filter which is provided in the housing, and configured to diffuse light emitted by the lighting device.

The apparatus may further comprise: a control board provided within the housing to control operations of the image sensor.

### DESCRIPTION OF THE DRAWINGS

FIG. 1 is a side view which illustrates a reading apparatus according to an embodiment along with a bagging table.
FIG. 2 is a vertical sectional view of the reading apparatus.
FIG. 3 is a front view which illustrates an internal structure of an imaging window of the reading apparatus.
FIG. 4 is a perspective view which illustrates an example of a configuration of a self POS which is provided with the reading apparatus.

### DETAILED DESCRIPTION

Embodiments provide a reading apparatus in which it is possible to reduce glare from lighting emitted by the apparatus.

A reading apparatus according to an embodiment is provided with a housing in which an imaging window is provided, an image sensor provided in the housing, wherein an imaging region of the image sensor is located exteriorly of the housing, and the imaging unit is positioned to receive light passing inwardly of the housing through the imaging window from the imaging region, and a lighting device, within the housing positioned above the window, configured to emit light to the imaging region through the imaging window.

One embodiment of the reading apparatus in the exemplary embodiment will be described in detail, with reference to accompanying drawings. In the following embodiment, an example in which the reading apparatus in the exemplary embodiment is applied to a vertical scanner which is used in a supermarket, a convenience store, or the like, will be described; however, the exemplary embodiment is not limited to these. In addition, the arrow A in the figure, which will be described below, denotes a vertical direction of the vertical scanner, the arrow B denotes an anteroposterior direction of the vertical scanner, and the arrow C denotes a width or horizontal direction of the vertical scanner.

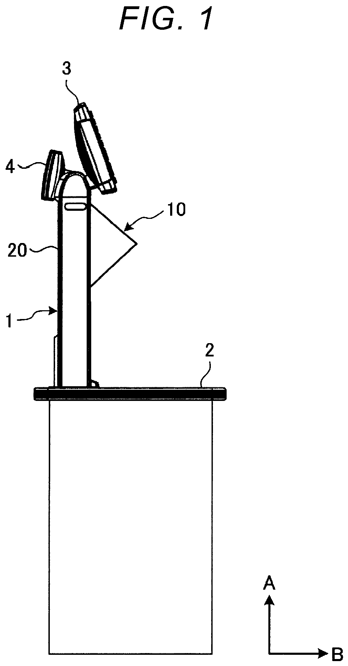

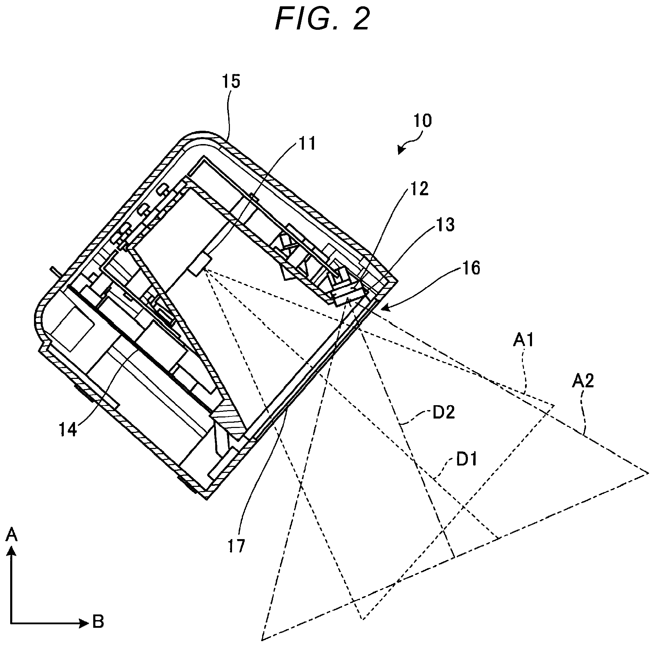

As illustrated in FIG. 1, a vertical scanner 1 is a vertical reading apparatus. The vertical scanner 1 is provided on a bagging table 2 so that an imaging window 17 (refer to FIG. 2) thereof is located at a position lower than eyes of a user who faces the scanner. The bagging table 2 is provided to put a shopping basket or items being purchased at a checkout location of a store. An operation input unit 3 and a display 4 are provided above the vertical scanner 1. The operation input unit 3 includes a display with a touch panel, a keyboard, or the like, and receives an operation of a user such as a sales person. The display 4 is for displaying, for example, a price of merchandise or other information to a customer.

The vertical scanner 1 includes a reading apparatus 10, and a support unit 20 which supports the reading apparatus 10 above the bagging table 2. The support unit 20 is provided at the bagging table 2 and extends vertically therefrom. The reading apparatus 10 is attached to the upper part of the support unit 20.

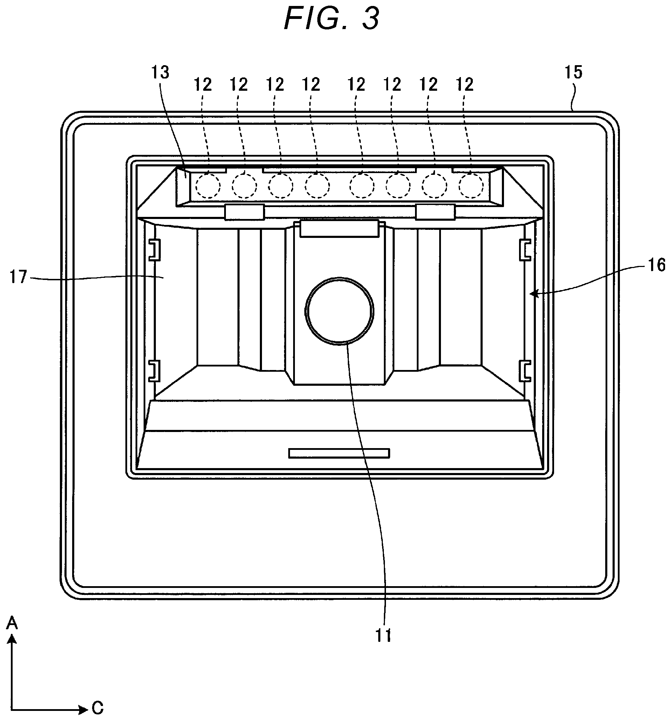

Hereinafter, a configuration of the reading apparatus 10 will be described. FIG. 2 is a vertical sectional view of the reading apparatus 10. FIG. 3 is a front view which illustrates an internal structure of the imaging window 17 of the reading apparatus 10. In addition, FIG. 3 illustrates an internal structure of the imaging window 17 which is viewed in the optical axis D1 direction in FIG. 2.

The reading apparatus 10 includes an imaging device 11, lighting devices 12, a diffusing filter 13, a control board 14, a housing 15. Based on an image obtained and output by the imaging device 11, the reading apparatus 10 outputs such data as image data output by the imaging device 11 and brightness-corrected image data.

The reading apparatus 10 is used by being connected to a merchandise sales data processing device (not illustrated) . The merchandise sales data processing device specifies, i.e., identifies, a commodity based on data output by the reading apparatus 10. Specifically, the merchandise sales data processing device identifies a commodity imaged by the reading apparatus 10, by using a technology related to generic object recognition.

The generic object recognition is a technology in which a type of a commodity is recognized from image data obtained by imaging a target commodity using a camera. A computer of the merchandise sales data processing device extracts external feature data of a commodity from image data. In addition, the computer calculates the similarity of the external feature data by correlating image data of the commodity with image data of a reference image which is registered in a recognition dictionary file, and recognizes a type, or identity, of the commodity based on similarities between the image data of the commodity and reference image data. The technology for recognizing a commodity included in an image is explained in the following document. "The Current State and Future Directions on Genetic Object Recognition" by Keiji Yanai, Journal of Information Processing Society of Japan, Vol. 48, No. SIG16, retrieved in Aug. 30, 2016, Internet <URL: http://mm.cs.uec.ac.jp/IPSJ-TCVIM-Yanai.pdf>

In addition, the technology for performing generic object recognition by performing a regional division of an image within each object is explained in the following document. "Semantic Texton Forests for Image Categorization and Segmentation" by Jamie Shotton, and others, retrieved in Aug. 30, 2016, Internet <URL:http://citeseerx.ist.psu.edu/viewdoc/download?doi= 10.1.1.145.3036&rep=rep1&type=pdf>

The housing 15 is a box-shaped container which accommodates the imaging device 11, the lighting devices 12, the diffusing filter 13, and the control board 14, and provides physical protection thereof. The front face of the housing 15 faces an opening 16 in the housing 15. The imaging window 17 is provided at the opening portion 16 of the housing 15 by being in close contact with the housing 15. The imaging window 17 is a transparent glass plate with low reflectivity.

The imaging device 11 includes an image sensor such as a charge coupled device (CCD) or a complementary metal-oxide semiconductor (CMOS), a lens, or the like. The imaging device 11 is disposed at an approximately center position of the imaging window 17 when viewing the imaging window 17 from a front surface thereof. The imaging device 11 images an object positioned in front of the imaging window 17 from the inside of the housing 15, and outputs the image.

The lighting devices 12 are for emitting light into a commodity held up to the imaging window 17. The lighting devices 12 are configured of a white light emitting diodes (LED) aligned horizontally, for example, and are disposed so that the light emitting surface of the lighting device faces the imaging window 17. In the example in FIG. 3, the lighting devices 12 are configured of eight light sources (e.g., light emitting diodes) ; however, the number of light sources is not limited to this number.

The diffusing filter 13 is disposed on the output path of light emitted by the lighting devices 12, and diffuses light of the lighting devices 12. With the diffusing filter 13, the light emitted from the lighting device 12 becomes consistent and luminance unevenness is moderated.

The control board 14 includes a processor, an input-output interface, for example. The control board 14 controls operations of the imaging device 11 or the lighting devices 12. In addition, the control board 14 outputs data based on the image data output by the imaging device 11 to the merchandise sales data processing device.

In the reading apparatus 10, illuminance of an imaging range is achieved when a region imaged by the imaging device 11 is irradiated with the lighting device 12. Specifically, the lighting devices 12 emit light into an area on the outer front side of the imaging window 17, that is, in a direction in which a user is present, from the inside of the housing 15. However, when light emitted from the lighting devices 12 directly enters eyes of a user, glare caused by the light may bother the user.

Therefore, the reading apparatus 10 according to the embodiment is provided with a configuration for reducing glare due to light emitted through the imaging window 17. Hereinafter, the configuration will be described.

First, the optical axis D1 is an imaging direction of the imaging device 11. The optical axis D1 is downward in the direction of the outer front side of the imaging window 17. The imaging device 11 images items such as commodities in the imaging range A1 (refer to FIG. 2) which is formed on the front side of the imaging window 17. In addition, the position of the imaging device 11 in the housing 15 is not particularly limited; however, it is preferable that the optical axis D1 of the imaging device 11 is located, and extends through, the center of imaging window 17.

The imaging range A1 of the imaging device 11 is determined by characteristics of an imaging lens (not illustrated) provided in the imaging device 11. For example, in case of using a fixed focus lens, a focal plane or point (position with best focus) is located at one position spaced from the lens by a predetermined distance. The resolution of an image of a commodity is the greatest when the commodity is located at the focal plane or point, and it is possible to image the commodity clearly. For this reason, it is preferable to adjust the focal point or plane of the imaging device 11 soastobeat a predeterminedposition (position at which commodity is positioned) in front of the imaging window 17.

The lighting devices 12 are provided along an upper edge portion of the imaging window 17 in the housing 15 (refer to FIG. 3) . In addition, the optical axis D2 of the lighting devices 12 extend downwardly from the front side of the imaging window 17. Here, the angle of the optical axis D2 of the lighting devices 12 with respect to a horizontal direction of the housing 15 is greater than an angle of the optical axis D1 of the imaging device 11. As illustrated in FIG. 2, the optical axis D2 of the lighting devices 12 is positioned so as to intersect the optical axis D1 on the front side of the imaging window 17. That is, in a lighting range A2 of light emitted by the lighting devices 12, the imaging range A1 formed on the front side of the imaging window 17 extends from above the imaging location of a commodity or other object. In addition, in the lighting range A2, an emitting direction or optical characteristics of the diffusing filter 13 is positioned so as to cover at least main portions of the imaging range A1.

The position of the lighting devices 12 is not limited to the position of FIG. 2, as long as the imaging range A1 can be emitted from above the imaging location of a commodity or other object. For example, when the lighting devices 12 are located on the front side of the imaging device 11 (close to imaging window 17), it is preferable that the lighting devices are located at an upper edge portion or an upper side portion of the imaging window 17, as illustrated in FIG. 2. In addition, when the imaging device 11 and the lighting devices 12 are disposed in a line in the vertical direction of the housing 15, it is possible to emit light into the imaging range A1 from above, by locating the lighting devices 12 above the imaging device 11.

The imaging window 17 is inclined with respect to a horizontal plane at the front side of the reading apparatus 10. More specifically, the opening portion 16 of the housing 15 is provided at an inclined angle which is approximately orthogonal to the optical axis D1 of the imaging device 11, and the imaging window 17 is provided at the opening portion 16. Moreover, an angle between the optical axis D2 and the table is greater than the imaging window 17 and the bagging table 2.

In the reading apparatus 10 with the above described configuration, a user causes the reading apparatus 10 to read the merchandise, by holding the merchandise at the front side of the imaging window 17. When merchandise is held at the front side of the imaging window 17, the merchandise enters the imaging range A1, and an image thereof is imaged by the imaging device 11. In addition, since the lighting devices 12 can provide illuminance when imaging merchandise, by emitting light into the imaging range A1, it is possible to improve quality of an image. In addition, since the lighting devices 12 reduce the light which may directly enter the eyes of a user by emitting light into the imaging range A1 from above, it is possible to reduce an occurrence of glare.

In addition, it is possible to form the imaging range A1 in the vicinity of the imaging window 17, while suppressing light in a front face direction of the housing 15, by causing the optical axes D1 and D2 of the imaging device 11 and the lighting devices 12 to face downwardly on the front side of the imaging window 17. Since a user causes merchandise to enter the space in front of the imaging window 17, because the imaging window 17 is inclined, it is possible to cover shallowness of depth of field of the imaging device 11.

While certain embodiments have been described, these embodiments have been presented by way of example only, and are not intended to limit the scope of the inventions . Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

For example, in the above described embodiment, the example in which the imaging window 17 is provided at a disposing angle of being approximately orthogonal to the optical axis D1 of the imaging device 11 is described; however, it is not limited to this. For example, the imaging window 17 may be perpendicularly provided.

The above described embodiment is adopted to the reading apparatus in which the technology of generic object recognition in which commodity is recognized from image data obtained by imaging the commodity is used; however, it is not limited to this, and the above described embodiment may be adopted to a reading apparatus which reads a code symbol such as a bar code, or a two-dimensional code.

In the above described embodiment, an LED is used as a light source; however, it is not limited to this, and another light source can be used.

In the above described embodiment, the example in which a rectangular imaging window which is a quadrangle in a front view is exemplified; however, it is not limited to this. For example, the imaging window may be a pentagon, a hexagon, a circular shape, or the like, in a front view.

In the above described embodiment, the vertical scanner 1 is exemplified; however, a device according to embodiments is not limited to this. For example, the embodiment may be applied to a self-checkout device (hereinafter, referred to as self POS terminal, simply) in which a customer himself performs reading and accounting of merchandise.

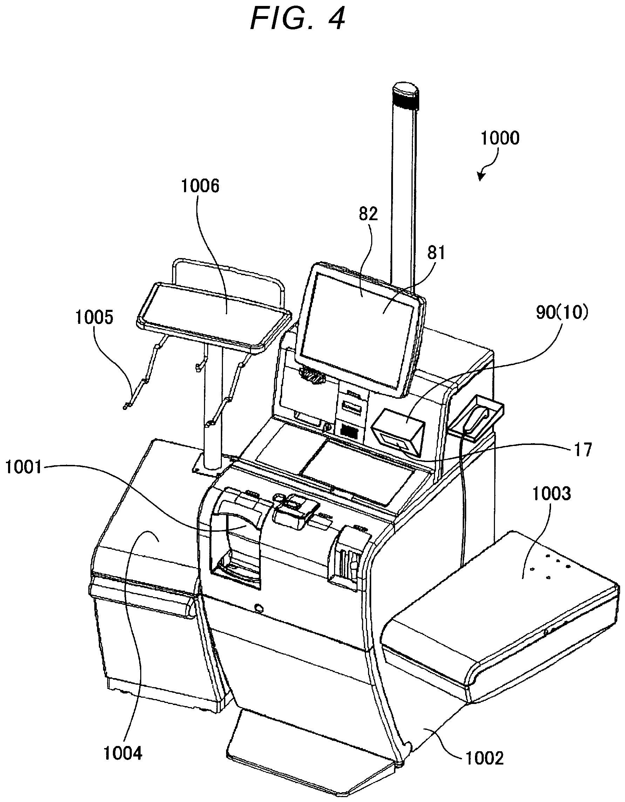

Here, FIG. 4 is a perspective view which illustrates an example of a configuration of a self POS terminal 1000. As illustrated in FIG. 4, a main body 1002 of the self POS terminal 1000 includes a first display unit 82 in which a touch panel 81 is provided on the surface thereof, or a merchandise reading unit 90 which reads an image of merchandise in order to recognize the identity or type of the merchandise. The merchandise reading unit 90 corresponds to the reading apparatus 10 of the above described vertical scanner 1.

The first display unit 82 is a liquid crystal display, for example. The first display unit 82 displays a total amount of money, i.e., the cost of, the merchandise, an amount of money paid by the customer, , an amount of change due the customer, or the like, and displays an adjustment screen, or the like, for selecting payment terms.

The merchandise reading unit 90 corresponds to the above described reading apparatus 10, and includes an imaging device 11, lighting devices 12, and the like, in the box-shaped container (none of them is illustrated in Fig. 4). The imaging device 11 and the lighting devices 12 of the merchandise reading unit 90 have the same configuration as that in the above described reading apparatus 10, and performs imaging and lighting over a imaging window 17. Specifically, the imaging device 11 images merchandise which a customer holds in front of the imaging window 17. The lighting devices 12 emit light into an imaging range of the imaging device 11 from above. In addition, the merchandise reading unit 90 reads a code symbol attached to merchandise from an image, or recognizes a type of the merchandise based on the image.

The self POS terminal 1000 includes a first table 1003 for placing unidentified merchandise in a basket on the right side of the main body 1002. The self POS terminal 1000 includes a second table 1004 for placing identified merchandise on the left side of the main body 1002. The second table 1004 includes a hook for hanging a bag 1005 for receiving identified merchandise, or a temporary placing table 1006 for temporarily placing identified merchandise before being input to a bag. Scales (not illustrated) are respectively provided in the first table 1003 and the second table 1004, and the scales have a function of confirming that a weight of merchandise is the same as each other before and after identification thereof.

In addition, the main body 1002 of the self POS terminal 1000 includes a change machine 1001 for performing receiving of money for settlement by the customer, or receiving of change.

Since it is possible to reduce light which directly enters eyes of a customer, even when a short customer such as a child operates the merchandise reading unit 90, by adopting the self POS terminal 1000 with the above described configuration, it is possible to reduce an occurrence of glare. For this reason, it is possible to improve convenience of a customer when using the self POS terminal 1000.

## Claims

1. A reading apparatus comprising:
a housing (15) in which an imaging window (17) is provided;
an image sensor (11)provided in the housing, wherein an imaging region (A1) of the image sensor is located exteriorly of the housing, and the image sensor is positioned to receive light passing inwardly of the housing through the imaging window from the imaging region; and
a lighting device (12) within the housing positioned above the window, the lighting device configured to emit light to the imaging region through the imaging window.

2. The apparatus according to claim 1,
wherein a plane of the imaging window and an optical axis of the image sensor are approximately orthogonal to each other.

3. The apparatus according to claim 1 or 2,
wherein the optical axis of the image sensor passes through approximately a center of the imaging window.

4. The apparatus according to any one of claims 1 to 3,
wherein the lighting device is disposed along an upper edge portion of the imaging window.

5. The apparatus according to any one of claims 1 to 4, further comprising:
a diffusing filter which is provided in the housing, and configured to diffuse light emitted by the lighting device.

6. The apparatus according to any one of claims 1 to 5, wherein the lighting device has a plurality of light sources horizontally aligned.

7. The apparatus according to any one of claims 1 to 6, further comprising:
a control board provided within the housing to control operations of the image sensor.

8. The reading apparatus according to any one of claims 1 to 7 wherein: the imaging window includes a first surface facing inwardly of the housing and a second surface facing outwardly of the housing, at least a portion of the housing extending over the first surface of the window

9. A POS device comprising a reading apparatus according to any one of claims 1 to 8, : and a table (2), wherein
the imaging window (17) faces a table (2), wherein the plane of the imaging window and a plane of the table are at an acute angle with respect to each other;
and the lighting device within the housing configured to emit light having an optical axis, wherein an angle between the optical axis of the lighting unit and the table is greater than the acute angle between the imaging window and the table .

10. The apparatus according to any one of claims 1 to 9, further comprising:
a control board provided within the housing to control operations of the image sensor.
